Europäisches Patentamt

European Patent Office

Office européen des brevets

⑱

(11) Publication number: **0 095 433**
**B1**

(12) **EUROPEAN PATENT SPECIFICATION**

(45) Date of publication of patent specification: **09.09.87**

(21) Application number: **83630083.0**

(22) Date of filing: **17.05.83**

(51) Int. Cl.⁴: **C 03 C 14/00, C 03 C 10/12,**
**C 03 C 10/14, D 01 F 9/08**

(54) **Reaction inhibited-silicon carbide fiber reinforced high temperature glass-ceramic composites and a method of manufacture of the same.**

(30) Priority: **20.05.82 US 380458**
**20.05.82 US 380464**

(43) Date of publication of application:
**30.11.83 Bulletin 83/48**

(45) Publication of the grant of the patent:
**09.09.87 Bulletin 87/37**

(84) Designated Contracting States:
**AT CH DE FR GB IT LI NL**

(56) References cited:
**DE-B-1 943 184**
**GB-A-1 392 045**
**US-A-3 537 868**
**US-A-3 977 886**
**US-A-4 324 843**

(73) Proprietor: **UNITED TECHNOLOGIES**
**CORPORATION**
**United Technologies Building 1, Financial Plaza**
**Hartford, CT 06101 (US)**
(73) Proprietor: **Corning Glass Works**
**Houghton Park**
**Corning New York 14831 (US)**

(72) Inventor: **Brennan, John J.**
**Middle Haddam Road**
**Portland Connecticut 06480 (US)**
Inventor: **Chyung, Kenneth**
**16 Timberlane**
**Painted Post New York 14870 (US)**
Inventor: **Taylor, Mark P.**
**Hillcrest Drive 25**
**Painted Post New York 14870 (US)**

(74) Representative: **Schmitz, Jean-Marie et al**
**OFFICE DENNEMEYER S.à.r.l. P.O. Box 1502**
**L-1015 Luxembourg (LU)**

Courier Press, Leamington Spa, England.

# 0 095 433

**Description**

The present invention concerns a silicon carbide fiber reinforced glass ceramic composite exhibiting use temperatures in excess of 1000°C, a method for forming said silicon fiber reinforced glass-ceramic composite and an opaque glass-ceramic body exhibiting high strength, a use temperature up to 1200°C, and oxidation resistance up to 1200°C.

The production of glass-ceramic articles originated in United States Patent No. 2 920 971. As is explained therein, glass-ceramic articles are derived through the controlled heat treatment of precursor glass bodies. Hence, the preparation of glass-ceramic articles commonly contemplates three basic steps: first, a glass forming batch of a desired composition, most frequently containing a nucleating agent, is melted; second, the melt is simultaneously cooled to a glass and an article of a predetermined configuration is shaped therefrom; and, third, the glass article is subjected to a heat treatment whereby nuclei are first generated in situ within the glass and thereafter crystals are grown on those nuclei.

Because the crystals are formed on a myriad of previously developed nuclei, the microstructure of glass-ceramic articles typically consists of relatively uniformly-sized, fine grained crystals homogeneously dispersed throughout a residual glassy matrix. Inasmuch as glass-ceramic articles are generally highly crystalline, viz., greater than about 50% by volume, the mechanical strengths thereof will normally be substantially greater than those of the precursor glass bodies. In point of fact, the glass-ceramic product will customarily exhibit physical properties quite different from those of the parent glass and more closely akin to those of the crystal phase. For example, where a refractory crystal phase is developed, the glass-ceramic will typically have a higher use temperature than that of the initial glass. The residual glassy matrix will generally have a composition very different from that of the precursor glass body since the components comprising the crystal phase will have been removed therefrom. Finally because the crystals are grown in situ and are dispersed within a continuous residual glassy matrix, glass-ceramic articles are free from voids and non-porous.

In the more than two decades that have elapsed since the initial disclosure of glass-ceramic articles, many workers have entered the field and their research has led to the production of glass-ceramic bodies from a broad range of parent glass compositions. This capability of preparing glass-ceramic bodies from vastly different starting materials has resulted in products of widely varying properties which, in turn, has recommended their utility in a diverse assortment of applications.

As noted above, certain glass-ceramic products demonstrate high temperature capabilities which, when coupled with a relatively low coefficient of thermal expansion to insure good resistance to thermal shock, have suggested their use in such applications as preform cores in the making of hollow metal castings, such as jet engine blades and vanes.

Although glass-ceramic articles are commonly inherently mechanically stronger than glass, for some applications even higher strengths are demanded. That requirement has led to the development of means for enhancing the strength of glass-ceramic bodies through such techniques as thermal tempering, chemical strengthening, and laminating to implant a thin surface thereon having a lower coefficient of expansion than the interior portion.

Also, because of the scarcity and increasing expense of many conventional high temperature structural metals, increased attention has been focused on non-metal containing composites as replacement for conventional high temperature metal-containing materials. Use of metal replacement, high strength fiber reinforced resin and even high strength fiber reinforced metal matrix composites has progressed to the point of commercial acceptance in products ranging from sporting goods to advanced jet aircraft components. One of the big problems with these composites, however, has been their maximum use temperature.

Ceramic, glass, and glass-ceramic bodies are known to the art which can be employed in high temperature applications. Unfortunately, however, those bodies frequently lack the mechanical strength desired and are invariably deficient in toughness and impact resistance. This situation has given rise to the preparation of composite bodies consisting of a matrix of ceramic, glass, or glass-ceramic material with inorganic fibers dispersed in continuous or discontinuous fashion therewithin.

Nevertheless, while such composites, for example, graphite fiber reinforced glass and alumina fiber reinforced glass, can be utilized at higher use temperatures than conventional high temperature structural metals, there is still much room for improvement. To illustrate, while the graphite fiber reinforced glass composite demonstrates high levels of strength, fatigue resistance, and fracture toughness, it is also susceptible to detrimental fiber oxidation at elevated temperatures. And while composites such as alumina fiber reinforced glass are oxidatively stable at high temperatures, the overall strength and toughness levels obtainable with these composites are less than those possible with a graphite reinforced glass system, for example. Similarly, high strength and toughness properties have been obtainable with silicon carbide fiber reinforced glass composites (note US—A—4 314 852) and silicon carbide fiber reinforced ceramic composites (note US—A—4 324 843).

US—A—3 607 608 illustrates the inclusion of fibers prepared from stainless steel boron, SiC, or graphite into glasses, carbides, nitrides, $Al_2O_3$, and devitrified glasses. In the latter case, the fibers are aligned in a molten glass, the mass pressed together into a glass body of a desired geometry, and the glass

2

**0 095 433**

thereafter devitrified (crystallized) through exposure to a heat treatment. Two base glass compositions were reported in the patent and those are listed below in weight percent:

| | | | |
|---|---|---|---|
| $SiO_2$ | 4 | $SiO_2$ | 28.7 |
| $Al_2O_3$ | 3 | CaO | 9.1 |
| $B_2O_3$ | 10 | $Na_2O$ | 11.77 |
| PbO | 83 | $B_2O_3$ | 26.3 |
| | | ZnO | 5.3 |
| | | BaO | 17.2 |
| | | $F_2$ | 3.1 |

US—A—3 681 187 describes the incorporation of carbon fibers into a variety of glass and glass-ceramic bodies. The patent cites the use of glass-ceramics having base compositions within the $Li_2O$—$Al_2O_3$—$SiO_2$, $Li_2O$—ZnO—$SiO_2$—$P_2O_5$, and $Li_2O$—MgO—$SiO_2$—$P_2O_5$ systems. The fibers may be aligned in molten glass or hot pressed together with powdered glass. In the latter practice, the pressing is carried out at a sufficiently high temperature to cause the glass to become plastic and flow around the fibers to form a proper matrix therefor. The resulting glass composite was thereafter heat treated to effect crystallization in situ of the glass.

US—A—3 940 277 outlines a method for making glass-ceramic articles exhibiting toughness and thermoplastic characteristics composed of silica fibers dispersed within a glassy matrix having a base composition in the $Na_2O$ and/or $K_2O$—$SiO_2$ field.

US—A—3 948 669 is directed to the production of glass-ceramic articles containing $TiO_2$ fibers which are grown in situ via heat treating glasses having base compositions within the alkaline earth metal oxide-$Al_2O_3$—$B_2O_3$—$TiO_2$ system.

The high temperature capability of SiC has recommended the use of fibers of that composition as reinforcing agents in applications wherein the articles will be exposed to very elevated temperatures. US—A—3 161 473 and 3 371 995, for example, specifically refer to the use of such fibers in glasses and ceramics.

Other patents of interest include US—A—4 256 378, 4 263 367, and 4 265 968 which are directed to the use of graphite fibers as reinforcing elements in glass composite materials; US—A—4 314 852 which discloses the utility of SiC fibers as reinforcing agents in glass composite materials; and US—A—4 324 843 which describes the applicability of SiC fibers for reinforcing ceramic composite materials.

Although glass-ceramic bodies customarily exhibit greater refractoriness and strength than their precursor glasses, there has been the desire to impart even higher mechanical strengths thereto. However, silicon carbide fibers have demonstrated a tendency to react with glass-ceramic matrices at high temperatures, which phenomenon has been a limiting factor in their utility as reinforcing elements.

Accordingly, the primary objective of the instant invention is to provide a silicon carbide fiber reinforced glass ceramic composite of high strength and capable of high temperature use, that is, capable of use in applications involving exposure to temperatures in excess of 1000°C and up to 1200°C.

A second objective is to provide a glass-ceramic material exhibiting high strength, capable of high temperature use and which demonstrates excellent resistance to oxidation at temperatures up to 1200°C. This latter feature permits the material to be utilized as a matrix to be reinforced through the incorporation of SiC fibers therewithin, since it will protect the fibers from disintegration through oxidation thereof.

The silicon carbide fiber reinforced glass composite of the present invention is characterized in comprising silicon carbide fibers implanted within a glass-ceramic matrix, said matrix being essentially free from $TiO_2$ and having a composition consisting essentially in terms of weight percent on the oxide basis of:

| | |
|---|---|
| $Li_2O$ | 1.5—5 |
| $Al_2O_3$ | 15—25 |
| $SiO_2$ | 60—75 |
| $As_2O_3$ | 0.5—3 |
| $Ta_2O_5$ | 0—10 |
| $Nb_2O_5$ | 0—10 |

3

| | |
|---|---|
| Ta$_2$O$_5$ and/or Nb$_2$O$_5$ | 1—10 |
| ZrO$_2$ | 1—5 |
| MgO | 0—10 |

and said fibers having a reaction inhibiting, diffusion barrier coating of niobium carbide and/or tantalum carbide.

The present invention is directed to a solution to the high temperature strength, fracture toughness, and oxidation stability problems which exist with composites of the prior art and comprises silicon carbide fiber reinforced glass-ceramic composites, wherein said glass-ceramic matrices have compositions within the base Li$_2$O—Al$_2$O$_3$—SiO$_2$ system and contain As$_2$O$_3$, ZrO$_2$ and Nb$_2$O$_5$ and/or Ta$_2$O$_5$.

The high strength composites according to the present invention comprise silicon carbide fibers in a glass-ceramic matrix wherein the tantalum and/or niobium ions in the matrix react during composite fabrication with the surface of the silicon carbide fibers to form reaction inhibiting, diffusion barrier layers thereon. The fibers can be laid in continuous or discontinuous fashion in the matrix and result in composites with high strength (e.g., much greater than the matrix itself) and oxidative stability even at high temperatures (e.g., in excess of 1000°C and, preferably, up to 1200°C) for prolonged periods of time.

Another aspect of the invention comprises base compositions which are essentially TiO$_2$ free and which are selected from the Li$_2$O—Al$_2$O$_3$—SiO$_2$—As$_2$O$_3$—MgO—ZrO$_2$—Nb$_2$O$_5$ and/or Ta$_2$O$_5$ system. Beta-spodumene and/or beta-quartz solid solutions constitute the predominant crystal phase. More specifically, the second objective can be achieved with operable compositions, characterized in that beta-spodumene and/or beta-quartz solid solution constitutes the predominant crystal phase and having a composition essentially free from TiO$_2$ consisting essentially expressed in terms of weight percent on the oxide basis, of

| | |
|---|---|
| Li$_2$O | 2—3.5 |
| Al$_2$O$_3$ | 15—25 |
| As$_2$O$_3$ | 0.5—3 |
| SiO$_2$ | 65.6—75 |
| ZrO$_2$ | 1—2 |
| Nb$_2$O$_5$ | 0—10 |
| Ta$_2$O$_5$ | 0—10 |
| Nb$_2$O$_5$+Ta$_2$O$_5$ | 1—10 |
| MgO | 1.5—6 |

Although TiO$_2$ has performed the function of a nucleating agent in virtually all of the commercially marketed glass-ceramic products, it does exert an effect as a flux and, hence, ought not to be employed as a primary nucleating agent in the subject compositions which are particularly designed for high temperature applications.

Moreover, where a composite body consisting of SiC fibers implanted within a glass-ceramic matrix is to be fabricated, the virtual absence of TiO$_2$ is essentially mandatory. Thus, TiO$_2$ appears to form titanium silicide intermetallic compounds at the interface of the SiC fiber-matrix interface during formation of the composite body, thereby resulting in low fracture toughness.

ZrO$_2$ does not act as a flux nor does it cause embrittlement of the fibers and, accordingly, can be utilized as a nucleating agent for the inventive compositions. Excessive amounts of ZrO$_2$ however, can lead to problems in melting the glass batch and to undesirable devitrification of the parent glass during formation of the composite body prior to the heat treatment designed to controllably crystallize the glass of the composite in situ. Accordingly, a maximum ZrO$_2$ content of 2% is preferred.

Li$^+$ ions, being very mobile, seem to cause an as yet undefined interfacial reaction with SiC fibers which deleteriously affects the overall properties of the composite. Hence, where a composite body containing SiC fibers is to be fabricated, the maximum Li$_2$O content will most preferably be limited to about 3.5%.

In the compositions which are more desirable both from the standpoint of fabrication into fine grained, highly crystalline bodies and for highest temperature utility, MgO will be substituted in part for Li$_2$O up to about 60 mole percent of the Li$_2$O content. Such substitution yields a Mg-stuffed beta-quartz and/or beta-spodumene solid solution as a primary crystal phase. To insure highly crystalline glass-ceramics wherein the crystals are uniformly fine grained, at least about 2% by weight of $Li_2O$ and 1.5% by weight of MgO will most preferably be included in the base composition. Most desirably, the maximum MgO content will be held at 6% by weight.

Arsenic, customarily added as $As_2O_5$ to the original glass batch, significantly enhances the resistance of the inventive glass-ceramics to oxidation. It is postulated that arsenic, because it can exist in two oxidation states, viz., $As^{+3}$ and $As^{+5}$, acts as an oxygen buffer which traps oxygen as it migrates inwardly from the surface of the composite. Self evidently, the buffer can become saturated and, when that occurs, oxidation will proceed normally. Amounts of arsenic in excess of 3%, expressed in terms of $As_2O_3$, do not appear to impart any substantive advantage and may adversely affect the physical properties of the inventive products.

$Nb_2O_5$ and $Ta_2O_5$ improve the refractory character of the inventive glass-ceramics and may act as secondary nucleants. However, they serve a most important function when SiC fiber containing composite articles are fabricated. Thus, the inclusion of $Nb_2O_5$ and/or $Ta_2O_5$ has been found to provide in situ protection from SiC glass interaction via the formation of NbC and/or TaC at the SiC glass interface and/or the development of a very thin protective layer around the SiC fiber. Whatever the mechanism involved, the NbC or TaC reaction product functions to limit active oxidation of the SiC fibers at elevated temperatures and to inhibit SiC glass interfacial reactivity. Because of the development of this carbide layer, it will be appreciated that the niobium and/or tantalum content in the glass-ceramic matrix will be reduced to the extent of the carbide layer.

Up to about 10% by weight total of such extraneous metal oxides as ZnO, BaO, $Fe_2O_3$, $Na_2O$, $K_2O$, CaO, and SrO may be incorporated into the base composition to modify the melting and forming capabilities and/or the physical properties of the inventive products, the amount of each individual oxide being so limited as to avoid any substantial adverse effect upon the properties desired. Most particularly, the level of extraneous oxides must be kept sufficiently low that the refractoriness of the material will not be impaired, excess glassy phase will not be generated, and/or low melting crystal phases are not developed. In general, then, values of the individual oxides will be held below 5% and, most preferably, below 3%. Transition metal and rare earth metal colorants may be included in conventional amounts.

The method for preparing the inventive articles contemplates three fundamental steps: first, a glass forming batch of a desired composition is melted; second, the melt is simultaneously cooled to at least below the transformation range thereof and a glass article of a predetermined geometry shaped therefrom; and third, the glass article is exposed to a temperature between about 750°—1200°C for a period of time sufficient to obtain a highly crystalline body.

The method according to the present invention for forming the silicon carbide fiber reinforced glass-ceramic composite is characterized in that it comprises the steps of:

(a) melting batch for an essentially $TiO_2$ free glass having a composition consisting, essentially in terms of weight percent on the oxide basis of

| | |
|---|---|
| $Li_2O$ | 1.5—5 |
| $Al_2O_3$ | 15—25 |
| $SiO_2$ | 60—75 |
| $As_2O_3$ | 0.5—3 |
| $Ta_2O_5$ | 0—10 |
| $Nb_2O_5$ | 0—10 |
| $Ta_2O_5$ and/or $Nb_2O_5$ | 1—10 |
| $ZrO_2$ | 1—5 |
| MgO | 0—10 |

(b) cooling said melt to a glass;

(c) comminuting said glass to a fine powder;

(d) implanting SiC fibers in said glass powder;

(e) consolidating said fibers and powder at an elevated temperature and pressure for a time sufficient to form a composite body wherein a NbC and/or TaC reaction inhibiting, diffusion barrier coating is developed in situ on said fibers;

(f) heat treating said composite body at an elevated temperature, but below the consolidation temperature, to cause said glass to devitrify to a highly crystalline glass-ceramic.

The transformation range has been defined as the temperature at which a liquid melt is considered to have been transformed into an amorphous solid; that temperature customarily being deemed to lie in the vicinity of the annealing point of a glass. Because the crystallization process is a function of time and temperature, the process proceeding more rapidly at higher temperatures, relatively brief dwell periods will be required at the hotter extreme of the range, e.g., perhaps 0.25 hour or even less, whereas much longer exposures, 24 hours or longer, may be necessary at the cooler end of the heat treating range to secure high crystallinity.

The heat treatment is designed to perform two principal functions; (1) to provide good nucleation such that (2) a highly crystalline, fine grained glass-ceramic article will be produced upon further heating. Nucleation occurs at temperatures somewhat above the transformation range with the final crystallization being accomplished at temperatures between about 875°C—1200°C. Accordingly, a nucleation time of about 1—6 hours will frequently be utilized at temperatures between about 750°C—850°C, followed by a crystallization growth period of about 1—8 hours.

US—A—3 238 085 discloses the preparation of glass-ceramic articles having base compositions within the $Li_2O$—$SiO_2$ system and which utilize 2—8% by weight $As_2O_3$ as a required nucleating agent. The compositions may optionally also contain at least one member of the group CaO, ZnO, CdO, $CeO_2$, $Sb_2O_3$, $Al_2O_3$ and $B_2O_3$, each in an amount less than 50% by weight. About 2—8% by weight of $MoO_3$ and/or $WO_3$ may also be included as a supplementary nucleating agent. No reference is made to $Ta_2O_5$ or $Nb_2O_5$.

US—A—3 537 868 is concerned with the preparation of glass-ceramic articles having base composition within the $Li_2O$—$Al_2O_3$—$SiO_2$ field which are nucleated with two kinds of agents: (1) with $Ta_2O_5$ and/or $Nb_2O_5$; and (2) with $TiO_2$ and/or $ZrO_2$. The statedly operable glasses consist essentially, in weight percent of:

| | |
|---|---|
| $SiO_2$ | 50.0—80.0 |
| $Al_2O_3$ | 10.0—35.0 |
| $Li_2O$ | 1.5—10.0 |
| $Nb_2O_5$ | 0—7.0 |
| $Ta_2O_5$ | 0—7.0 |
| $Nb_2O_5+Ta_2O_5$ | 0.1—7.0 |
| $TiO_2$ | 0—10 |
| $ZrO_2$ | 0—5 |
| $TiO_2+ZrO_2$ | 0.1—7.0 |
| $Nb_2O_5+Ta_2O_5+TiO_2+ZrO_2$ | 1.0—15.0 |

$$Li_2O+SiO_2+Al_2O_3+Nb_2O_5+Ta_2O_5+TiO_2+ZrO_2>90.0$$

Up to about 4% individually of the following optional ingredients may be included: $Na_2O$, $K_2O$, BeO, CaO, SrO, BaO, ZnO, CdO, PbO, and $Bi_2O_3$. Up to 8% individually of MgO and $B_2O_3$ may be added.

$As_2O_3$ is an optional ingredient which, if present, performs as a fining agent. In the working examples, $As_2O_3$ was reported as 0.3% or 0.5%.

$TiO_2$ is a useful optional component and there is no teaching of the utility of substantial amounts of $As_2O_3$ to function as an oxygen buffer.

US—A—3 573 939 discloses the production of glass-ceramic articles consisting essentially, in weight percent, of 2—7% $Li_2O$, 0—25% $Al_2O_3$, 10—60% $SiO_2$, and 20—80% $Ta_2O_5+Nb_2O_5$, where $Nb_2O_5$ comprises 0—20%. Up to 10% total of such compatible metal oxides as ZnO, MgO, $B_2O_3$, $Na_2O$, $K_2O$, CaO, SrO, PbO, and $P_2O_5$ may optionally be present. Individually, the quantities of $B_2O_3$, $Na_2O$, $K_2O$, CaO, SrO, PbO and $P_2O_5$ ought not to exceed 5%.

The essential absence of $TiO_2$ is not demanded, the total of $Ta_2O_5$ and/or $Nb_2O_5$ is far in excess of that required in the instant inventive products, and $As_2O_5$ is merely noted as being useful as a fining agent, if one is needed.

US—A—3 732 116 is directed to the formation of glass-ceramic articles consisting essentially, in weight percent, of 3—6% $Li_2O$, 15—20% $Al_2O_3$, 65—75% $SiO_2$, 1—6% total of at least one member of the group 1—4% SrO, 1—4% $Y_2O_3$, 1—5% $La_2O_3$, and 1—5% $Ta_2O_5$, and 2—7% $RO_2$ wherein $RO_2$ consists of 2—6% $TiO_2$ and 0—3% $ZrO_2$. Up to 5% total of optional additions may be present from the following: BaO, CaO, $K_2O$, MgO, $Na_2O$, and ZnO. $As_2O_3$ is noted as being optionally included as a fining agent.

The presence of $TiO_2$ is required and $As_2O_3$ is not a necessary component.

US—A—3 843 551 describes a laserable glass-ceramic article consisting essentially, in weight percent, of:

6

# 0 095 433

| | |
|---|---|
| SiO$_2$ | 45—68 |
| Al$_2$O$_3$ | 15—30 |
| P$_2$O$_5$ | 0—10 |
| Li$_2$O | 2—6 |
| MgO | 0—3 |
| ZnO | 0—8 |
| ZrO$_2$ | 2—7 |
| Ta$_2$O$_5$ | 1—7 |
| La$_2$O$_3$ | 3—12 |
| Activating Agent | 0.1—5 |

La$_2$O$_3$ is observed as having a favorable effect upon crystallization, As$_2$O$_3$ is noted as being a customary fining agent which may optionally be present.

There is no reference to the necessity for having As$_2$O$_3$ in the composition to perform as an oxygen buffer.

US—A—3 977 886 is concerned with the production of transparent glass-ceramic articles consisting essentially, in weight percent, of:

| | |
|---|---|
| SiO$_2$ | 45—68 |
| Al$_2$O$_3$ | 15—30 |
| P$_2$O$_5$ | 0—10 |
| Li$_2$O | 2—6 |
| MgO | 0—3 |
| ZnO | 0—8 |
| ZrO$_2$ | 2—7 |
| Ta$_2$O$_5$ | 1—7 |

Up to 15% by weight total of the following components may be included in the indicated proportions of: 0—2% BaO and/or CaO, 0—12% rare earth oxides, 0—1% Na$_2$O and/or K$_2$O, and 0—1% As$_2$O$_3$ and/or Sb$_2$O$_3$, the latter two ranges of constituents function in combination to fine the glass.

There is no reference to the necessity for having As$_2$O$_3$ in the composition to perform as an oxygen buffer.

The foregoing, and other features and advantages of the present invention, will become more apparent from the following description and accompanying drawing.

In order that the invention may be fully understood reference is made on the simple figure which shows a fiber reinforced composite according to the present invention.

According to the present invention a glass, which can be converted to a glass-ceramic, is the ideal matrix material to form the composites of the present invention. During composite densification the matrix is retained in the glassy state, thus avoiding fiber damage and promoting densification under low applied pressure. After densification to the desired fiber plus matrix configuration, the glassy matrix can be converted to the crystalline state, the degree and extent of crystallization being controlled by the matrix composition and heat treatment schedule employed. A wide variety of glasses could be used in this manner; however, limitation on the amount and activity of titanium present in the glass is required since the titanium appears to compete with the niobium and tantalum in reacting with the silicon carbide fibers, resulting in a decrease in composite properties. Thus, titanium is capable of reacting with the silicon carbide fiber to form titanium silicides around the silicon carbide fiber, which severely degrade the fiber strength and, as a consequence, the strength and fracture toughness of the composite are greatly lowered. Accordingly, no titania nucleating agents are used. Another nucleating agent such as zirconia is substituted for the conventional titania.

7

In addition to eliminating titanium on the silicon carbide fibers, to obtain composites with the improved properties disclosed, the addition of either niobium or tantalum ions to the glass-ceramic is necessary. These ions promote the formation of either a niobium carbide or tantalum carbide reaction barrier layer around the silicon carbide fibers during the composite fabrication step. This reaction barrier prevents any interaction between the glass-ceramic matrix and the silicon carbide fibers at elevated temperatures (about 900 to about 1200°C) in air or other oxidizing environment.

Glass-ceramics having base compositions within the lithium aluminosilicate system are well known to the art. Such compositions demonstrate low coefficients of thermal expansion and, hence, are particularly advantageous in those applications where thermal shock resistance is a major concern. Such compositions are capable of use in high temperature applications, viz., in excess of 1000°C, and, with minor additions of such compatible metal oxides as BaO and MgO, at temperatures up to 1200°C. As stated above, $TiO_2$ will be essentially absent from the composition. $ZrO_2$ has been found to perform well as a nucleating agent in amounts up to about 5% by weight.

The levels of niobium and/or tantalum in the matrix composition should be adequate to form the necessary diffusion or reaction barrier on the SiC fiber. While 3—5% by weight, expressed in terms of $Nb_2O_5$ and/or $Ta_2O_5$, has been found to constitute the preferred range, amounts between about 1—10% are operable. If too little is used, a complete reaction barrier will not form; if too much is used, although in minor amounts it would not be detrimental to the matrix, ultimately it could crystallize out to form a phase in the matrix which may exert an adverse effect upon the properties of the composite. It will be recognized, of course, that inasmuch as a NbC and/or TaC coating is developed upon SiC fibers during fabrication of the composite, the levels of niobium and/or tantalum in the structure of the glass-ceramic matrix will be somewhat less than those in the precursor glass.

Table I reports compositions, expressed in terms of parts by weight on the oxide basis, of thermally crystallizable glasses within the $Li_2O$—$Al_2O_3$—$SiO_2$—$ZrO_2$—$Ta_2O_5$ and/or $Nb_2O_5$—$As_2O_3$ system which, when subjected to the heat treatment practice of the instant invention, crystallized in situ to relatively uniformly fine grained glass-ceramic articles wherein β-spodumene and/or stuffed β-quartz solid solution constituted the primary crystal phase. Inasmuch as the sum of the tabulated components totals or approximately totals 100, for all practical purposes the values recorded for the individual ingredients may be deemed to reflect weight percent. The actual batch components may comprise any materials, either the oxides or other compounds, which, when melted together, are converted to the desired oxide compositions in the proper proportions.

The batch ingredients were compounded, ball-milled together to assist in securing a homogeneous melt, and deposited into platinum crucibles. The crucibles were introduced into a furnace, heated to about 1650°C, and the batches melted for about 16 hours. Glass bodies were prepared from the melts in two ways. Thus, in the first the melts were poured into steel molds to produce glass slabs having the dimensions of about 15.25×15.25×1.27 cm and the slabs were transferred immediately to an annealer operating at about 650°C. After annealing, specimens of the proper geometry for use in physical property determinations were cut from the slabs. In the second method the melts were poured as a relatively fine stream into a container of water which produced finely divided particles of glass, this processing being termed "drigaging" in the glass art.

Thereafter, the particles were comminuted to form a frit passing a No. 325 United States Standard Sieve (44 μm). This frit can be useful in preparing composite bodies containing fibers.

8

TABLE I

|  | compara-tive 1 | 2 | 3 | 4 | compara-tive 5 | 6 | 7 | compara-tive 8 |
|---|---|---|---|---|---|---|---|---|
| $SiO_2$ | 69.2 | 67.2 | 65.9 | 65.6 | 71.2 | 67.5 | 69.0 | 72.9 |
| $Al_2O_3$ | 21.1 | 20.5 | 20.1 | 20.0 | 20.7 | 19.7 | 20.1 | 21.2 |
| $Li_2O$ | 3.1 | 3.0 | 3.0 | 2.9 | 5.1 | 4.8 | 4.9 | 3.1 |
| MgO | 1.9 | 1.8 | 1.8 | 1.8 | — | — | — | — |
| ZnO | 1.1 | 1.1 | 1.0 | 1.0 | — | — | — | — |
| $ZrO_2$ | 1.6 | 1.6 | 1.5 | 1.9 | 2.0 | 2.0 | 2.0 | 2.1 |
| BaO | 0.8 | 0.8 | 0.8 | 0.7 | — | — | — | — |
| $Nd_2O_3$ | 0.2 | 0.2 | 0.2 | 0.2 | — | — | — | — |
| $Na_2O$ | 0.2 | 0.2 | 0.2 | 0.2 | — | — | — | — |
| $K_2O$ | 0.1 | 0.1 | 0.1 | 0.1 | — | — | — | — |
| $As_2O_3$ | 0.7 | 0.6 | 0.6 | 0.7 | 1.0 | 1.0 | 1.0 | 1.0 |
| $Nb_2O_5$ | — | 2.9 | 4.8 | — | — | — | 3.0 | — |
| $Ta_2O_5$ | — | — | — | 5.0 | — | 5.0 | — | — |

TABLE I (Continued)

|  | compara-tive 9 | 10 | 11 | 12 | 13 | 14 | 15 |
|---|---|---|---|---|---|---|---|
| $SiO_2$ | 67.0 | 68.5 | 70.4 | 66.8 | 68.2 | 69.5 | 68.0 |
| $Al_2O_3$ | 19.5 | 20.0 | 20.5 | 19.5 | 19.9 | 18.5 | 18.2 |
| $Li_2O$ | 2.9 | 2.9 | 2.0 | 1.9 | 2.0 | 2.0 | 1.9 |
| MgO | 2.6 | 2.6 | 4.0 | 3.8 | 3.9 | 4.0 | 3.9 |
| $ZrO_2$ | 2.0 | 2.0 | 2.0 | 2.0 | 2.0 | 2.0 | 2.0 |
| $As_2O_3$ | 1.0 | 1.0 | 1.0 | 1.0 | 1.0 | 1.0 | 1.0 |
| $Nb_2O_5$ | — | 3.0 | — | — | 3.0 | 3.0 | 5.0 |
| $Ta_2O_5$ | 5.0 | — | — | 5.0 | — | — | — |

The test specimens plus the remainders of the slabs were moved to an electrically-heated furnace and exposed to the treatment schedules recited in Table II. In each schedule the temperature of the article was raised at about 5°C/minute. At the conclusion of the tabulated heat treatment the electric current to the furnace was cut off and the crystallized articles left inside the furnace and permitted to cool to room temperature therein. This practice has been termed "cooling at furnace rate" and has been estimated to average about 3°—5°C/minute.

Table II further records a visual description of the crystallized bodies, an identification of the crystal phases present in each as determined via X-ray diffraction analyses, and various physical properties were measured.

9

TABLE II

| Example | Heat treatment | Visual description |
|---------|----------------|--------------------|
| 1 | 780°C for 2 hours<br>1050°C for 2 hours | Surface crystallized layer |
| 2 | 780°C for 2 hours<br>1050°C for 2 hours | White opaque, fine-grained |
| 3 | 780°C for 2 hours<br>1050°C for 2 hours | white opaque, fine-grained |
| 4 | 780°C for 2 hours<br>1050°C for 2 hours | White opaque, fine-grained |
| 5 | 780°C for 2 hours<br>1050°C for 2 hours | Surface crystallized layer |
| 6 | 780°C for 2 hours<br>1050°C for 2 hours | Creamy-white opaque, fine-to-medium-grained |
| 7 | 780°C for 2 hours<br>1050°C for 2 hours | White, opaque, fine-grained |
| 8 | 780°C for 2 hours<br>1050°C for 2 hours | Surface crystallized layer |
| 9 | 780°C for 2 hours<br>1050°C for 2 hours | Creamy-white opaque, fine-to-medium-grained |
| 10 | 780°C for 2 hours<br>1050°C for 2 hours | White opaque, medium-grained |
| 11 | 780°C for 2 hours<br>1150°C for 2 hours | Surface crystallized layer |
| 12 | 780°C for 2 hours<br>1150°C for 2 hours | Creamy-white, opaque, medium-grained |
| 13 | 780°C for 2 hours<br>1150°C for 2 hours | Light-gray, opaque, fine-grained |
| 14 | 780°C for 2 hours<br>1150°C for 2 hours | Light beige opaque, fine-grained |
| 15 | 780°C for 2 hours<br>1150°C for 2 hours | Light beige opaque, fine-grained |

# 0 095 433

## TABLE II (Continued)

| Example | Crystal phases | Exp. coeff. |
|---|---|---|
| 1 | Not internally crystallized, weak | — |
| 2 | β-spodumene solid solution | $15 \times 10^{-7}/°C$ |
| 3 | β-spodumene solid solution | — |
| 4 | β-spodumene solid solution | — |
| 5 | Not internally crystallized, very weak | — |
| 6 | β-spodumene solid solution | — |
| 7 | β-spodumene solid solution | $3.6 \times 10^{-7}/°C$ |
| 8 | Not internally crystallized, very weak | — |
| 9 | β-spodumene solid solution | $12.2 \times 10^{-7}/·C$ |
| 10 | β-spodumene solid solution | $12 \times 10^{-7}/°C$ |
| 11 | Not internally crystallized, very weak | — |
| 12 | β-quartz solid solution | $19.1 \times 10^{-7}/°C$ |
| 13 | β-quartz solid solution | — |
| 14 | β-quartz solid solution | — |
| 15 | β-quartz solid solution | — |

As can be observed for an examination of Tables I and II with respect to Examples 1, 5, 8 and 11, where neither $Nb_2O_5$ nor $Ta_2O_5$ is present in the composition, the precursor glass bodies develop a surface crystallized layer only. If the glass is subjected to a very extended heat treatment, crystallization will proceed inwardly to produce a weak, coarsely crystalline article. This development of surface crystallization only unequivocally underscores the fact that $Nb_2O_5$ and $Ta_2O_5$ perform as nucleating agents in conjunction with $ZrO_2$.

When the parent glass, absent $Nb_2O_5$ and $Ta_2O_5$, if fritted, however, i.e., comminuted to a fine powder, and this frit then heat treated, the surface area of the particle is so great that, upon sintering, the resultant body will be virtually totally crystalline. This essentially total crystallinity has been especially observed where such frits have been utilized in combination with SiC fibers to form a fiber reinforced, crystalline composite body. The mechanism underlying the effect which the SiC fibers exert upon the development of crystallization has not been fully elucidated. It appears, however, that the fibers in some manner provide nucleation since the generated crystallization is relatively fine grained. Whatever the circumstances, a highly crystalline matrix can be developed for enveloping SiC fibers from precursor glass compositions from which $Nb_2O_5$ and $Ta_2O_5$ are absent. Nevertheless, the inclusion of $Nb_2O_5$ and/or $Ta_2O_5$ insures the formation of fine grained, internally nucleated articles plus, where SiC fibers are present, provides for the development of oxidation resistant NbC and/or TaC coatings on the fibers.

The compositions to serve as matrices for the SiC fibers in the composites of the present invention, exhibiting resistance to oxidation and providing in situ protection from SiC-glass interaction via the effect of $As_2O_3$ as an oxygen buffer and the formation of NbC and/or TaC at the SiC-glass interface and/or the development of a very thin protective layer around the SiC fiber consist essentially, expressed in terms of weight percent of:

| | |
|---|---|
| $Li_2O$ | 1.5—5.0 |
| $Al_2O_3$ | 15—25 |
| $SiO_2$ | 60—75 |
| $As_2O_3$ | 0.5—3.0 |

| | |
|---|---|
| Ta$_2$O$_5$ | 0—10 |
| Nb$_2$O$_5$ | 0—10 |
| Ta$_2$O$_5$+Nb$_2$O$_5$ | 1—10 |
| ZrO$_2$ | 1—5 |
| MgO | 0—10 |

with the preferred level of Li$_2$O being 2—3.5%, the preferred MgO content being 1.5—6%, and the preferred maximum of ZrO$_2$ being 3%.

Those compositions are crystallized in situ by exposure to temperatures of about 750°—1200°C. As can be appreciated, the time of exposure to achieve a highly crystalline body is dependent upon the temperature utilized. However, dwell periods ranging between about 0.25—24 hours are common.

In general, the inventive process contemplates the starting materials as being present in the form of glass powders. Where the feedstock is present in crystalline form, it will be necessary to melt the material, to cool the melt sufficiently rapidly to form a glass body, and, thereafter, to comminute the glass to a powder preferably passing through a No. 325 United States Standard Sieve (44 μm).

An important facet of the invention is to select glass-ceramic matrix materials such as those described above which can be densified (in combination with the silicon carbide fibers) in the glassy state with a viscosity low enough to permit complete densification with subsequent transformation into a substantially complete crystalline state providing a composite with a use temperature in excess of 1000°C. It is also possible to convert the starting crystalline powder to the glassy state during preheat treatment prior to application of pressure for densification.

Any silicon carbide fiber system with the requisite strength can be used, although a multifilament silicon carbide yarn with an average filament diameter up to 50 μm is preferred and yarn with average filament diameter of 5 to 50 μm is especially preferred. Nippon Carbon Company of Japan produces such a yarn with about 500 fibers per tow and an average fiber diameter of about 10 μm. The average strength of the fiber is approximately 2000 MPa (300,000 psi), and it has a use temperature of up to 1500°C. The yarn has a density of approximately 2.6 grams per cc and an elastic modulus of approximately 221 GPa (32×10$^6$ psi).

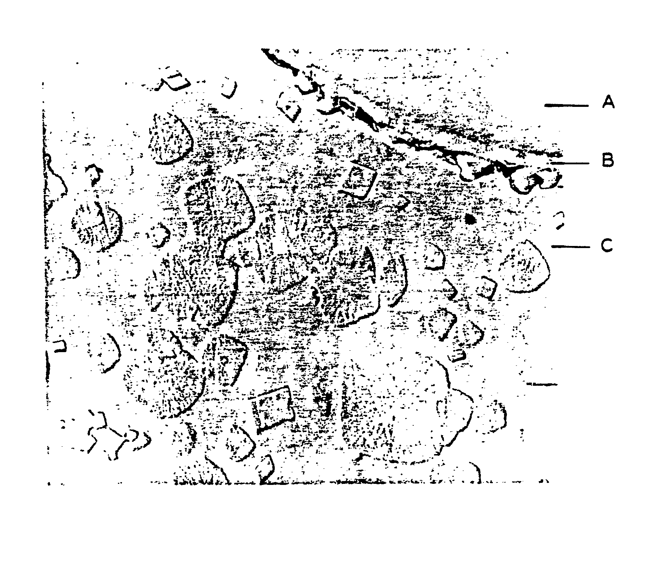

In a key step according to the present invention a reaction or diffusion barrier is formed around the silicon carbide fibers to insure the integrity of both the fiber and the matrix. This reaction barrier is formed by adding certain ions to the glass composition. The ions added (a) must be soluble in the glass melt, (b) must have a higher negative free energy of formation for a carbide than a silicide, and (c) must not form a stable matrix silicate phase (i.e., must be available to react with the fibers). Tantalum and niobium ions have been found to satisfy these criteria. Where a composite containing silicon carbide fibers is formed via hot pressing, it has been found that these ions react with the silicon carbide fibers to form a thin carbide reaction or diffusion barrier around the fibers. Note Fig. 1 where A is the silicon carbide fiber, B the tantalum or niobium carbide barrier layer, and C the matrix material. The thin carbide barrier layer formed does not degrade the silicon carbide fiber; in fact, it prevents the usual degradation of fiber strength that occurs during hot pressing and prevents fiber-matrix reaction that normally occurs in the presence of oxygen at temperatures in excess of 950°C. The tantalum and niobium are preferably added to the glass-ceramic constituents prior to batch melting for uniformity of dispersion, although they may be added after batch melting. And while the oxides of tantalum and niobium are preferred, any glass soluble forms of the compounds may be utilized.

If a composite with discontinuous fibers is to be made, the fibers are chopped to paper length (e.g., about 1.0 to about 3.0 cm) by any conventional means and formed into sheets by conventional papermaking techniques.

While the silicon carbide paper may normally be isotropically laid, i.e., a substantially equal number of fibers in-plane in every direction, the fiber laying can be favored in a particular in-plane direction in prepartion of an article when it is known that such article will be receiving stress primarily in a single direction. However, to insure the improved properties of composites of the present invention, such favored laying should not exceed about 90% of the total fiber laying, the fibers should be laid in-plane, and the average fiber length should preferably be about 1 to about 3 cm.

The composites of the present invention are preferably formed in the case of the discontinuous fiber containing composites by cutting the formed paper to the desired composite shape followed by papermaking binder removal, for example, by solvent immersion or touching each ply to a Bunsen burner flame to burn off the binder. The plies are next either dipped into a slurry of the glass or simply stacked with layers of powdered glass placed between each ply sufficient to substantially fill the spaces between the plies. The formed articles are then hot pressed at elevated temperature to form the composites.

The preferred method for forming the articles of the present invention is by hot pressing the mixture of silicon carbide fibers and glass powder as mentioned above. This method gives particular design flexibility in orienting the fibers, and sheets formed by such method are peculiarly adapted to hot pressing into

12

desired shapes. An exemplary method comprises continuously unwinding a roll of silicon carbide paper, continuous fiber, or yarn from a spool at a moderate rate of speed and passing such fibers through a slip of the powdered glass, solvent, and plasticizer to impregnate the fibers. The impregnated fibers can then be rewound onto a larger rotating spool. An exemplary slip composition may be composed of 130 gm of powdered glass and 390 ml of propanol. An alternative composition may comprise 100 gm of the glass, 200 ml of water, and 100 ml of latex binder such as Rhoplex, Rhoplex is a resin suspension or dispersion marketed by Rohm and Haas, Philadelphia, Pennsylvania. Excess glass and solvent can be removed by pressing a squeegee against the drum as it winds. Preferably, the ground glass is sized so that 90% of it passes through a sieve of 44 µm size of openings. The thus impregnated tape is then dried either at ambient temperature or with a radiant heat source to remove solvent. Where an organic binder or other higher melting organic adjuvant has been utilized, it may be necessary to fire the tape at somewhat elevated temperatures to burn out the organic materials prior to hot pressing.

Following impregnation, the sheets of fibers are removed from the drum and cut into strips to conform to the dimensions of the article to be fabricated. Where hot pressing is utilized to form the composite, the operation may be undertaken, preferably either under vacuum or an inert gas, such as argon, in metal dies coated with colloidal boron nitride, or graphite dies sprayed with boron nitride powder, at pressures up to about 68.95 MPa, the preferred range being about 6.9—13.78 MPa, and temperatures of about 1100°C—1500°C. Time of hot pressing will vary depending on composite makeup, but generally will be accomplished between about 1 minute and 1 hour. Higher pressures permit the use of lower temperatures and shorter dwell times. Silicon carbide fiber loading in the composite is preferably about 15% to about 70% by volume. The mold can also be vibrated to ensure uniform distribution of the glass powder over the laid fiber surfaces. Processing by starting with the matrix material in the glassy state to permit composite densification by hot pressing, followed by converting the glass into the crystalline state, largely contributes to the superior properties of the resulting composite. If, after hot pressing, any significant portion of the matrix material is found to be in the glassy state, further heat treatment may be necessary to substantially completely crystallize the matrix for optimum high temperature performance. And, although it is preferred to have the matrix material in the fully crystalline state, acceptable composite properties are attainable even if some of the matrix is retained in the composite in the glassy state, e.g., up to 25% by weight. Nevertheless, the greatest degree of refractoriness will normally be exhibited where the glass content of the matrix is very low.

The processing parameters and composition of the material used can vary widely, depending upon the ultimate use of the article. While it is not necessary to lay the plies in any particular direction, it has been found that the best strength properties for discontinuous fiber reinforced glass-ceramic matrix composites appear to be obtained when each individual ply, in the case of the non-woven articles, is laid up in the same direction, i.e., all plies are aligned during lay-up to keep colinear their original orientation with regard to the paper roll axis.

In the case of the continuous fiber composites, the fibers can be laid up relative to one another in alternating ply stacks in any sequence desired, e.g., each layer with fibers unidirectional (0° orientation), alternating plies of fiber oriented 0° and 90° or 0°/30°/60°/90°, 0°/±45°/90°, etc.

To illustrate the processing parameters and the desirable properties demonstrated by the inventive products, the following working examples were carried out.

Examples

A continuous tow of silicon carbide fibers provided by Nippon Carbon Company as described above was run through a Bunsen Burner flame to burn off the sizing. The tow was then run (through a slurry of lithium aluminosilicate glass powder in propanol, said glass having the composition recorded in Table I. The glasses of Table III are reported in terms of parts by weight on the oxide basis, but, because the sum of the components totals or closely approximates 100, for all practical purposes the values listed may be deemed to reflect weight percent.

TABLE III

| | compara-tive 1 | 2 | 3 | 4 |
|---|---|---|---|---|
| $SiO_2$ | 69.2 | 65.6 | 65.9 | 67.2 |
| $Al_2O_3$ | 21.1 | 20.0 | 20.1 | 20.5 |
| $Li_2O$ | 3.1 | 2.9 | 3.0 | 3.0 |
| $MgO$ | 1.9 | 1.8 | 1.8 | 1.8 |
| $ZnO$ | 1.1 | 1.0 | 1.0 | 1.1 |
| $ZrO_2$ | 1.6 | 1.9 | 1.5 | 1.6 |
| $BaO$ | 0.8 | 0.7 | 0.8 | 0.8 |
| $Nd_2O_3$ | 0.2 | 0.2 | 0.2 | 0.2 |
| $Na_2O$ | 0.2 | 0.2 | 0.2 | 0.2 |
| $K_2O$ | 0.1 | 0.1 | 0.1 | 0.1 |
| $As_2O_3$ | 0.7 | 0.7 | 0.6 | 0.6 |
| $Nb_2O_5$ | — | — | 4.8 | 2.9 |
| $Ta_2O_5$ | — | 5.0 | — | — |

An exemplary slip composition comprised 130 grams of powdered glass in 390 milliliters of propanol. Preferably, the glass is ground so that 90% of it passes through a sieve of 44 μm size of openings. After passing through the slurry, the tows are collected on a rotating drum to form a fiber "tape" impregnated with the glass powder. The impregnated fiber tapes can be either air dried or dried with a radiant heat source such as a heating blower to remove solvent. The resulting impregnated tapes were laid about 16 layers deep in a die assembly for consolidation at elevated temperature. Hot pressing consolidation was performed at 1450°C at a pressure of about 6.9 MPa ($1 \times 10^3$ psi) for about 15 minutes in vacuum (about $10^{-4}$ Torr). The resultant composites contained about 50% by volume silicon carbide fibers, the remainder consisting of lithium aluminosilicate glass-ceramic. The samples were about 0.10 inch (0.25 cm) thick.

Table IV recites the flexural strength displayed by the composites both immediately after the hot pressing consolidation and after samples of the composites had been subjected to subsequent heat treatments in an air atmosphere. Measurements were conducted at room temperature (RT) and at 1000°C. Observations of the fiber-matrix interface obtained via examination thereof with a light microscope are also recorded.

TABLE IV
3-pt Flexural strength of composites
unidirectional fiber orientation

| | | RT bend strength (MPa) | | | 1000°C bend strength (MPa) | | |
|---|---|---|---|---|---|---|---|
| | Example | As-pressed | 900°C 24 hrs | 1050°C 2 hrs | 900°C 24 hrs | 1050°C 2 hrs | Comments |
| | 1 | 613.65 | 606.76 | 468.86 | 896.35 | 606.76 | Much fiber/matrix reaction after 1050°C 2 hrs, air |
| | 2 | 792.92 | 772.24 | 772.24 | 792.9 | 758.45 | No fiber/matrix reaction after 1050°C, 2 hrs., air |
| | 3 | 889.45 | 813.61 | 827.4 | 937.72 | 1089.41 | No fiber/matrix reaction after 1050°C, 2 hrs., air |
| | 4 | 813.61 | 758.45 | 696.39 | 820.50 | — | No fiber/matrix reaction after 1050°C, 2 hrs., air |

A comparison of the values reported for Example 1 with those of Examples 2—4 clearly indicates the improvement in strength and in high temperature stability that the inventive composites demonstrate over those of the prior art. This circumstance is especially evident after exposures to temperatures in excess of 1000°C.

As is noted above, additions of up to 10% by weight total of such extraneous metal oxides as BaO, CaO, $Fe_2O_3$, $K_2O$, $Na_2O$, $Nd_2O_3$, SrO, and ZnO may be incorporated into the base $Li_2O$—$Al_2O_3$—$As_2O_3$—$SiO_2$—$ZrO_2$—$Nb_2O_5$ and/or $Ta_2O_5$ compositions to modify the melting and forming capabilities and/or the physical properties of the inventive products, the amount of each being so limited as to avoid any substantial adverse effect upon the properties desired. Thus, in general, the levels of the individual oxides will be held below 5% and, most preferably, below 3%.

As also observed above, very refractory glass-ceramic bodies can be prepared by replacing up to 60 mole percent of the $Li_2O$ content with MgO. However, to insure the production of uniformly fine-grained, highly crystalline articles, at least about 2% $Li_2O$ and 1.5% MgO will most desirably be present in the composition.

We have found that matrices consisting essentially solely of $Li_2O$, MgO, $Al_2O_3$, $As_2O_3$, $SiO_2$, $ZrO_2$, $Nb_2O_5$ and/or $Ta_2O_5$ can be utilized to prepare SiC fiber-containing composites that have use temperatures of up to 1200°C. Table V sets forth several glass compositions, expressed in terms of weight percent on the oxide basis, illustrative of precursors suitable for conversion to such highly refractory glass-ceramic matrices.

TABLE V

| | 5 | 6 | 7 | 8 | 9 |
|---|---|---|---|---|---|
| $SiO_2$ | 67.0 | 68.5 | 66.8 | 68.2 | 66.8 |
| $Al_2O_3$ | 19.5 | 20.0 | 19.5 | 19.9 | 19.5 |
| $Li_2O$ | 2.9 | 2.9 | 1.9 | 2.0 | 1.9 |
| MgO | 2.6 | 2.6 | 3.8 | 3.9 | 3.8 |
| $ZrO_2$ | 2.0 | 2.0 | 2.0 | 2.0 | 2.0 |
| $As_2O_3$ | 1.0 | 1.0 | 1.0 | 1.0 | 1.0 |
| $Nb_2O_5$ | — | 3.0 | — | 3.0 | 5.0 |
| $Ta_2O_5$ | 5.0 | — | 5.0 | — | — |

Composite bodies were prepared from glass powders of those glasses in like manner to the procedure outlined above with respect to the glasses of Table III. Table VI reports the flexural strength evidenced by those composites in like manner to Table IV., viz., measurements conducted on as-pressed samples and specimens subjected to subsequent heat treatments in an air environment. To illustrate the higher refractoriness of these matrices, measurements were carried out at room temperature and at 1200°C.

TABLE VI
3-pt Flexural strength of composites
unidirectional fiber orientation

| Example | RT bend strength (MPa) | | | | 1200°C bend strength (MPa) | | |
|---|---|---|---|---|---|---|---|
| | As-pressed | 900°C 24 hrs | 1050°C 2 hrs | 1100°C 2 hrs | 900°C 24 hrs | 1050°C 2 hrs | 1200°C 1 hr |
| 5 | 792.92 | 675.71 | 606.76 | — | 565.39 | — | 592.97 |
| 6 | 772.24 | 841.19 | 792.92 | 744.6 | 606.76 | 620.5 | 0.779.13 |
| 7 | 586.0 | 689.5 | 648.13 | 0.765.34 | 655.0 | 827.4 | — |
| 8 | 972.19 | 923.93 | 861.87 | 937.72 | — | — | 854.98 |
| 9 | 889.45 | — | 792.92 | 861.87 | — | 689.5 | 903.24 |

Composites formed from Examples 5—9 exhibit strengths at 1200°C which are three to four times greater than composites prepared from Examples 1—4, as well as demonstrating excellent strengths at room temperature. Composites made from Examples 5—9 also retain their strengths after exposure for 24 hours in air to temperatures of 1100°C and higher.

By unidirectional is meant all the silicon carbide fibers are oriented in each individual layer in substantially the same axial direction (±5°). By uniaxial is meant that each layer in the composite is oriented such that all the unidirectionally laid fibers in all layers are oriented in substantially the same axial direction (±5°).

Based on the composition of the matrix material, the particular fiber reinforcement, and the process of forming the composite, an article with exceptional high strength, fracture toughness, and oxidation resistance especially at high temperatures is obtained. Each continuous fiber reinforced layer of the composite, regardless of the number of layers of orientation, has an axial flexural strength greater than 551.6 MPa, and, in most instances, greater than 689.5 MPa. As for fracture toughness, although specific fracture toughness measurements have not been made on the composites of the present invention, it is anticipated that each layer will be have a critical stress intensity factor ($K_{Ic}$) greater than $1099.10^5$ $N \cdot m^{-2}cm^{\frac{1}{2}}$. This is clearly superior to any known ceramic material currently available and, with the high temperature strength and oxidative stability of the composites of the present invention, is superior at temperatures greater than 1000°C than similar glass, glass-ceramic, or ceramic composites not containing reaction-inhibiting Nb and/or Ta ions.

It is particularly noteworthy that, even after initial fracture, composites of the present invention retain a substantial fraction of their original untested strength. This resistance to fracture, even in the presence of initiated damage, is distinctly different from the brittle nature of conventional ceramic articles.

The reinforced ceramics of the present invention have particular utility in environments where oxidation resistance, high strength, and toughness are required, and, because those properties are retained in a high temperature environment (e.g., in excess of 1000°C and even in excess of 1200°C), the inventive composites are eminently suitable for use in such applications as a gas turbine engine or internal combustion engine environment, and in high temperature structural ceramic components.

**Claims**

1. A silicon carbide fiber reinforced glass ceramic composite exhibiting use temperatures in excess of 1000°C characterized in comprising silicon carbide fibers implanted within a glass-ceramic matrix, said matrix being essentially free from $TiO_2$ and having a composition consisting essentially in terms of weight percent on the oxide basis, of:

| | |
|---|---|
| $Li_2O$ | 1.5—5 |
| $Al_2O_3$ | 15—25 |
| $SiO_2$ | 60—75 |
| $As_2O_3$ | 0.5—3 |

16

| | |
|---|---|
| Ta$_2$O$_5$ | 0—10 |
| Nb$_2$O$_5$ | 0—10 |
| Ta$_2$O$_5$ and/or Nb$_2$O$_5$ | 1—10 |
| ZrO$_2$ | 1—5 |
| MgO | 0—10 |

and said fibers having a reaction inhibiting, diffusion barrier coating of niobium carbide and/or tantalum carbide.

2. A composite according to claim 1 exhibiting use temperatures up to 1200°C, characterized in that Li$_2$O is present in an amount of 2—3.5%, MgO is present in an amount of 1.5—6%, and ZrO$_2$ is present in an amount of 1—3%.

3. A method for forming the silicon carbide fiber reinforced glass-ceramic composite of claim 1, characterized in that it comprises the steps of:

(a) melting batch for an essentially TiO$_2$ free glass having a composition consisting, essentially in terms of weight percent on the oxide basis of

| | |
|---|---|
| Li$_2$O | 1.5—5 |
| Al$_2$O$_3$ | 15—25 |
| SiO$_2$ | 60—75 |
| As$_2$O$_3$ | 0.5—3 |
| Ta$_2$O$_5$ | 0—10 |
| Nb$_2$O$_5$ | 0—10 |
| Ta$_2$O$_5$ and/or Nb$_2$O$_5$ | 1—10 |
| ZrO$_2$ | 1—5 |
| MgO | 0—10 |

(b) cooling said melt to a glass;
(c) comminuting said glass to a fine powder;
(d) implanting SiC fibers in said glass powder;
(e) consolidating said fibers and powder at an elevated temperature and pressure for a time sufficient to form a composite body wherein a NbC and/or TaC reaction inhibiting, diffusion barrier coating is developed in situ on said fibers;
(f) heat treating said composite body at an elevated temperature, but below the consolidation temperature, to cause said glass to devitrify to a highly crystalline glass-ceramic.

4. The method according to claim 3, characterized in that said consolidating comprises hot pressing at about 1100°—1500°C at pressures up to about 68.95 MPa.

5. The method according to claim 4, characterized in that said heat treating comprises exposing said composite to a temperature between about 750°—1200°C for about 0.25—24 hours.

6. An opaque glass-ceramic body exhibiting high strength, a use temperature up to 1200°C, and oxidation resistance up to 1200°C, characterized in that beta-spodumene and/or beta-quartz solid solution constitutes the predominant crystal phase and having a composition essentially free from TiO$_2$ consisting essentially expressed in terms of weight percent on the oxide basis, of

| | |
|---|---|
| Li$_2$O | 2—3.5 |
| Al$_2$O$_3$ | 15—25 |
| As$_2$O$_3$ | 0.5—3 |
| SiO$_2$ | 65.6—75 |
| ZrO$_2$ | 1—2 |

| | |
|---|---|
| Nb$_2$O$_5$ | 0—10 |
| Ta$_2$O$_5$ | 0—10 |
| Nb$_2$O$_5$+Ta$_2$O$_5$ | 1—10 |
| MgO | 1.5—6 |

**Patentansprüche**

1. Siliciumcarbidfaserverstärkter Glaskeramikverbundstoff, der Gebrauchstemperaturen über 1000°C aufweist, gekennzeichnet durch in eine Glaskeramikmatrix implantiert Siliciumcarbidfasern, wobei die Matrix im wesentlichen frei von TiO$_2$ ist und eine Zusammensetzung hat, die, ausgedrückt in Gewichtsprozent auf Oxidbasis, aus

| | |
|---|---|
| Li$_2$O | 1,5—5 |
| Al$_2$O$_3$ | 15—25 |
| SiO$_2$ | 60—75 |
| As$_2$O$_3$ | 0,5—3 |
| Ta$_2$O$_5$ | 0—10 |
| Nb$_2$O$_5$ | 0—10 |
| Ta$_2$O$_5$ und/oder Nb$_2$O$_5$ | 1—10 |
| ZrO$_2$ | 1—5 |
| MgO | 0—10 |

besteht, wobei die Fasern einen reaktionshemmenden Diffusionssperrüberzug aus Niobcarbid und/oder Tantalcarbid haben.

2. Verbundstoff nach Anspruch 1, mit Gebrauchstemperaturen bis zu 1200°C, dadurch gekennzeichnet, daß Li$_2$O in einer Menge von 2—3.5% vorhanden ist, MgO in einer Menge von 1,5—6% vorhanden ist, und ZrO$_2$ in einer Menge von 1—3% vorhanden ist.

3. Verfahren zum Herstellen des Siliciumcarbidfaserverstärkten Glaskeramikverbundstoffes nach Anspruch 1, dadurch gekennzeichnet, daß es folgende Schritte beinhaltet:

(a) Schmelzen eines Gemenges für ein im wesentlichen TiO$_2$-freies Glas, das eine Zusammensetzung hat, die aus im wesentlichen, ausgedrückt in Gewichtsprozent auf Oxidbasis,

| | |
|---|---|
| Li$_2$O | 1,5—5 |
| Al$_2$O$_3$ | 15—25 |
| SiO$_2$ | 60—75 |
| As$_2$O$_3$ | 0,5—3 |
| Ta$_2$O$_5$ | 0—10 |
| Nb$_2$O$_5$ | 0—10 |
| Ta$_2$O$_5$ und/oder Nb$_2$O$_5$ | 1—10 |
| ZrO$_2$ | 1—5 |
| MgO | 0—10 |

besteht,

(b) Abkühlen der Schmelze zu einem Glas;
(c) Zerkleinern des Glases zu einem feinen Pulver;
(d) Implantieren von SiC-Fasern in das Glaspulver;

(e) Konsolidieren der Fasern und des Pulvers bei einer erhöhten Temperatur und Druck während einer Zeit, die ausreicht, um einen Verbundkörper herzustellen, wobei ein NbC- und/oder TaC-Reaktionshemmungsdiffusionssperrüberzug auf den Fasern in situ gebildet wird;

(f) Wärmebehandeln des Verbundkörpers bei einer erhöhten Temperatur, aber unter der Konsolidierungstemperatur, damit das Glas zu einer hochkristallinen Glaskeramik entglast wird.

4. Verfahren nach Anspruch 3, dadurch gekennzeichnet, daß die Konsolidierung Heißpressen bei etwa 1100°C—1500°C bei Drücken bis zu etwa 68,95 MPa beinhaltet.

5. Verfahren nach Anspruch 4, dadurch gekennzeichnet, daß die Wärmebehandlung beinhaltet, den Verbundstoff einer Temperatur zwischen etwa 750°—1200°C etwa 0,25—24 Stunden lang auszusetzen.

6. Undurchsichtiger Glaskeramikkörper, der eine hohe Festigkeit, eine Gebrauchstemperatur bis zu 1200°C und Oxidationsbeständigkeit bis zu 1200°C aufweist, dadurch gekennzeichnet, daß ein β-Spodumen- und/oder ein β-Quarz-Mischkristall die überwiegende Kristallphase bildet und eine Zusammensetzung hat, die im wesentlichen frei von $TiO_2$ ist und, ausgedrückt in Gewichtsprozent auf Oxidbasis, im wesentlichen aus

| | |
|---|---|
| $Li_2O$ | 2—3,5 |
| $Al_2O_3$ | 15—25 |
| $As_2O_3$ | 0,5—3 |
| $SiO_2$ | 65,6—75 |
| $ZrO_2$ | 1—2 |
| $Nb_2O_5$ | 0—10 |
| $Ta_2O_5$ | 0—10 |
| $Nb_2O_5+Ta_2O_5$ | 1—10 |
| $MgO$ | 1,5—6 |

besteht.

**Revendications**

1. Matériau composite vitrocéramique renforcé de fibres de carbure de silicium et ayant des températures d'utilisation supérieures à 1.000°C, caractérisé en ce qu'il comprend des fibres de carbure de silicium implantées à l'intérieur d'une matrice vitrocéramique, cette matrice étant essentiellement exempte de $TiO_2$ et ayant une composition constituée essentiellement (en termes de pour-cent en poids sur la base des oxydes) de:

| | |
|---|---|
| $Li_2O$ | 1,5—5 |
| $Al_2O_3$ | 15—25 |
| $SiO_2$ | 60—75 |
| $As_2O_3$ | 0,5—3 |
| $Ta_2O_5$ | 0—10 |
| $Nb_2O_5$ | 0—10 |
| $Ta_2O_5$ et/ou $NB_2O_5$ | 1—10 |
| $ZrO_2$ | 1—5 |
| $MgO$ | 0—10, |

ces fibres comportant un revêtement d'arrêt de diffusion, inhibiteur de réaction, constitué de carbure de niobium et/ou de carbure de tantale.

2. Matériau composite selon la revendication 1, ayant des températures d'utilisation allant jusqu'à 1.200°C, caractérisé en ce que Li$_2$O est présent en une quantité de 2—3,5%, MgO est présent en une quantité de 1,5—6% et ZrO$_2$ est présent en une quantité de 1—3%.

3. Procédé en vue de former le matériau composite vitrocéramique renforcé de fibres de carbure de silicium selon la revendication 1, caractérisé en ce qu'il comprend les étapes qui consistent à:

(a) faire fondre une charge pour un verre essentiellement exempt de TiO$_2$ et ayant une composition constituée essentiellement (en termes de pour-cent en poids sur la base des oxydes) de:

| | |
|---|---|
| Li$_2$O | 1,5—5 |
| Al$_2$O$_3$ | 15—25 |
| SiO$_2$ | 60—75 |
| As$_2$O$_3$ | 0,5—3 |
| Ta$_2$O$_5$ | 0—10 |
| Nb$_2$O$_5$ | 0—10 |
| Ta$_2$O$_5$ et/ou Nb$_2$O$_5$ | 1—10 |
| ZrO$_2$ | 1—5 |
| MgO | 0—10; |

(b) refroidir cette masse fondue pour former un verre;

(c) pulvériser ce verre en une poudre fine;

(d) implanter des fibres de SiC dans cette poudre de verre;

(e) consolider ces fibres et cette poudre à température et sous pression élevées pendant un laps de temps suffisant pour former un corps composite dans lequel un revêtement d'arrêt de diffusion, inhibiteur de réaction de NbC et/ou de TaC est formé in situ sur ces fibres;

(f) soumettre ce corps composite à un traitement thermique à température élevée, mais en dessous de la température de consolidation, de façon à provoquer la dévitrification de ce verre en un matériau composite vitrocéramique hautement cristallin.

4. Procédé selon la revendication 3, caractérisé en ce que cette consolidation consiste en un pressage à chaud à environ 1.100—1.500°C sous des pressions allant jusqu'à environ 68,95 mPa.

5. Procédé selon la revendication 4, caractérisé en ce que ce traitement thermique consiste à exposer le matériau composite à une température se situant entre environ 750 et 1.200°C pendant environ 0,25 à 24 heures.

6. Corps vitrocéramique opaque ayant une haute résistance, une température d'utilisation allant jusqu'à 1.200°C et une résistance à l'oxydation allant jusqu'à 1.200°C, caractérisé en ce qu'une solution solide de β-spodumène et/ou de β-quartz constitue la phase cristalline prédominante et a une composition essentiellement exempte de TiO$_2$, constituée essentiellement (exprimé en termes de pour-cent en poids sur la base des oxydes) de:

| | |
|---|---|
| Li$_2$O | 2—3,5 |
| Al$_2$O$_3$ | 15—25 |
| As$_2$O$_3$ | 0,5—3 |
| SiO$_2$ | 65,6—75 |
| ZrO$_2$ | 1—2 |
| Nb$_2$O$_5$ | 0—10 |
| Ta$_2$O$_5$ | 0—10 |
| Nb$_2$O$_5$+Ta$_2$O$_5$ | 1—10 |
| MgO | 1,5—6 |